# EUROPÄISCHE PATENTSCHRIFT

(11) **EP 2 994 707 B1**
(45) Veröffentlichungstag und Bekanntmachung des Hinweises auf die Patenterteilung: **10.01.2018**
(21) Anmeldenummer: 14726514.4
(22) Anmeldetag: 02.05.2014
(51) Int. Cl.: C01G 49/14, F26B 21/06, F26B 3/00, C01D 5/18, F26B 17/00, F26B 21/08

(54) **VERFAHREN ZUR ERZEUGUNG VON SALZEN MIT REDUZIERTEM KRISTALLWASSERGEHALT**
METHOD FOR PRODUCING SALTS WITH A REDUCED WATER OF CRYSTALLISATION CONTENT
PROCÉDÉ DE PRODUCTION DE SELS À TENEUR RÉDUITE EN EAU DE CRISTALLISATION

(30) Priorität: 07.05.2013 AT 3792013
(43) Veröffentlichungstag der Anmeldung: 16.03.2016
(73) Patentinhaber: Andritz Technology and Asset Management GmbH, 8045 Graz (AT)
(72) Erfinder: KRÖHL, Paul Bernhard, 88212 Ravensburg (DE)
(74) Vertreter: Schweinzer, Friedrich
(86) Internationale Anmeldenummer: PCT/EP2014/001177
(87) Internationale Veröffentlichungsnummer: WO 2014/180547

(56) Entgegenhaltungen:
- WO-A1-2005/036080
- DE-B- 1 113 666
- GB-A- 388 553
- GB-A- 805 159

## Beschreibung

Die Erfindung betrifft ein Verfahren zur Trocknung von kristallwasserhaltigen Salzen in konvektiven Apparaten.

Viele Salze bilden bei der Kristallisation Hydratstufen. Das eingelagerte Kristallwasser ist oft unerwünscht, da es die Transportkosten erhöht, die Konzentration erniedrigt und in einigen Fällen zu nicht lagerstabilen Produkten führt. Die Höhe der Hydratstufe, d.h. die Anzahl der eingelagerten Wassermoleküle lässt sich in einigen Fällen vorteilhaft durch die Kristallisationsbedingungen steuern, in vielen Fällen kommt man allerdings um eine thermische Entwässerung nicht herum. Je mehr Wassermoleküle pro Salzmolekül eingebunden werden, desto leichter spalten sich die letzten eingebundenen Wassermoleküle auch wieder ab, d.h. sowohl die erforderliche Energie zur Überwindung der Bindungsenergie als auch die erforderliche Temperatur zur Abspaltung steigen mit zunehmender Anzahl der je Salzmolekül bereits abgespaltenen Wassermoleküle. Hoch wasserhaltige Produkte, wie z.B. Glaubersalz (Magnesiumsulfat *10 Wasser), geben schon bei etwas erhöhter Raumtemperatur Kristallwasser ab und schmelzen (gehen in Lösung). Dieses Verhalten ist ursächlich für die unterschiedlichen Produktqualitäten, die nach einer allfälligen thermischen Trocknung vorliegen.

In der technischen Praxis werden je nach Trocknungsverfahren und abhängig von den gewählten Betriebs- und Auslegungsbedingungen abriebempfindliche, staubige und feinkörnige Produkte erhalten oder stabile und staubarme Granulate bzw. Zwischenstufen Übergangsstufen der beiden Qualitäten. Die Trocknung erfolgt typischerweise in Drehrohrtrocknern (Trommeltrocknern), Stromrohrtrocknern oder Wirbelschichttrocknern mit oder ohne eingebaute Wärmetauscher. Auch Sprühgranulation in der Wirbelschicht kommt zum Einsatz, ist wegen der höheren Wasserverdampfung aber weniger wirtschaftlich. Zum Teil werden die Trocknungsverfahren auch miteinander kombiniert.

Allen Verfahren gemeinsam ist, dass die Produktqualität unterschiedlich und nicht im Voraus bestimmbar ist. Viele Verfahren liefern ein staubiges, abriebempfindliches Produkt mit niedrigem Schüttgewicht von 800-1000 g/l, andere festes Granulat mit 1200 g/l und mehr (z.B. Sprühgranulation, Wirbelschichttrockner mit eingebauten Wärmetauschern).

Derartige Verfahren zur Trocknung von kristallwasserhaltigen Salzen sind z.B. aus der GB 805159 bekannt, die generell eine Trocknung beschreibt. Die DE 1113666 beschreibt eine Staubrückführung und die GB 388553 beschreibt eine Trocknung mittels Vakuum.

Ziel der Erfindung ist daher die Erzeugung von Salzen mit reduziertem Kristallwassergehalt mit bestimmten Eigenschaften unabhängig vom eingesetzten Verfahren, wobei die Eigenschaften wesentlich vom Schüttgewicht abhängen.

Die Erfindung ist daher dadurch gekennzeichnet, dass die Trocknung oberhalb eines festgelegten Feuchtegehalts, beispielsweise über einer absoluten Feuchte von 10%, des Trocknungsgases abläuft, wobei der Feuchtegehalt des Trocknungsgases oberhalb des festgelegten Feuchtewerts durch vollständige Rückführung desselben eingestellt wird, wobei das verdampfte Wasser aus dem Kreislauf durch Kondensation ausgeschleust und der Feuchtegehalt des Trocknungsgases mit Hilfe der Kondensatortemperatur eingestellt wird. Das Gas, das die Salzpartikel während der Trocknung umgibt, weist somit eine bestimmte Feuchte auf. Dadurch wird die Trocknungsgeschwindigkeit beeinflusst. Bei hohen Geschwindigkeiten verdampft das Wasser zunächst spontan an der Oberfläche, infolge der dann ansteigenden Temperatur wird im Inneren des Partikels weiteres Kristallwasser freigesetzt, verdampft und durch Poren und Kapillaren an die Oberfläche geführt. Wegen der hohen Massenströme werden die Kapillaren und Poren aufgeweitet und es entsteht ein poröses Partikel mit niedriger Dichte und geschwächter Struktur. Bei niedrigen Trocknungsgeschwindigkeiten verbleibt das abgespaltene Kristallwasser länger im flüssigen Zustand, die partiell entstehende Salzlösung kann Poren, Risse und Kapillaren teilweise wieder schließen bzw. verkleinern. Es ergibt sich ein festes Partikel hoher Dichte. Insbesondere Salze mit hohen Kristallwassergehalten, z.B. Decahydrate wie Glaubersalz (Natriumsulfat) geben schon bei niedrigen Temperaturen (deutlich unter 100°) Kristallwasser ab. Wegen der niedrigen Temperaturen kommt es zu nicht ausreichender Verdampfung und das Salz schmilzt bzw. verbackt.

Eine günstige Weiterbildung der Erfindung ist daher dadurch gekennzeichnet, dass Staub und/oder getrocknetes Produkt mit dem feuchten kristallwasserhaltigen Salz vor der Trocknung zusammengeführt und ggf. gemischt wird. Das überschüssige freie Kristallwasser kann dabei durch Rekombination gebunden werden und man erhält eine unkritische Mischung, die weiter getrocknet werden kann. Diese Rückmischung erfolgt typischerweise in einem dem Trockner vorgeschalteten Mischer, kann durch entsprechende Gestaltung der Trocknergeometrie aber auch im Trockner vorgenommen werden.

Eine vorteilhafte Weiterbildung der Erfindung ist dadurch gekennzeichnet, dass an Stelle von Staub und/oder zusätzlich zu Staub gemahlenes Überkorn mit dem feuchten kristallwasserhaltigen Salz zusammengeführt wird ("Abpudern").

Eine günstige Weiterbildung der Erfindung ist dadurch gekennzeichnet, dass der Feuchtegehalt nur in einem geometrischen Teilbereich des Trockners, z.B. in der Aufgabezone, eingestellt wird.

Bei der Trocknung von Eisensulfat-Heptahydrat (Grünsalz) zu Monohydrat gemäß dem erfindungsgemäßen Verfahren hat es sich als vorteilhaft herausgestellt, die absolute Feuchte des Trocknungsgases beim Verlassen des Trockners auf mehr als 15% einzustellen, um ein Produkt mit einem Schüttgewicht über 1100 g/l zu erzeugen.

Nach der Lehre des vorgeschlagenen Verfahrens gibt es mehrere Möglichkeiten, die vorteilhaften Bedingungen einzustellen. Bei den zur Anwendung kommenden Trocknungsapparaten führt das Gas das verdampfte Wasser fort, die Energiezufuhr kann ebenfalls durch das Gas und/oder durch Kontaktflächen vorgenommen werden.

Bei rein konvektiven Apparaten ist die Abgasfeuchte in der Regel zu niedrig, deshalb sind Heißgastemperatur und -mengenstrom mit Hilfe der Energiebilanz so zu wählen, dass das dadurch verdampfte Wasser die Abgasfeuchte in den gewünschten Bereich anhebt. Dies gelingt nicht zwangsläufig bei allen Salz- und Trocknerarten. Es gibt Beschränkungen bei der Anhebung der Temperatur (Produktschädigung, Materialstandfestigkeit, verfügbare Energiequellen,..) , eine Anhebung des Volumenstroms führt dem Apparat zwar mehr Energie zu, verändert aber nicht den Abgaszustand in die gewünschte Richtung.

Konvektive Apparate mit indirekter Beheizung können unabhängig vom Volumenstrom die Wasserverdampfungsrate einstellen, zum einen über die Temperatur der Heizflächen und zum anderen über die Größe derselben. Dies bedeutet beispielsweise für einen Wirbelschichttrockner mit eingebauten Wärmetauschern, die Übertragungsfläche durch Vergrößerung der Packungsdichte (m² Wärmeaustausch-Fläche/m³ Schichtvolumen) zu erhöhen oder bei unveränderter Packungsdichte die Schichttiefe zu vergrößern, wenn die Steigerung der Temperatur schon ausgereizt ist. Dadurch erhöht sich bei unveränderter Anströmung die Wasserverdampfung und die Abgasfeuchte wird wie gewünscht angehoben.

Darüber hinaus gibt es die Möglichkeit der beliebigen Einstellung des Abgaszustands durch teilweise oder vollständige Rückführung des Abgases. Bei der teilweisen Rückführung wird ein Teil des feuchten Abgases ausgeleitet, der Rest zurückgeführt. Das Verhältnis der Gasströme bestimmt die Abgasfeuchte und die gesamte Wasserverdampfung wird mit dem Teilstrom ausgeleitet.

Bei der vollständigen Rückführung in einem geschlossenen Gaskreislauf wird das verdampfte Wasser in einem Kondensator kondensiert und aus dem Kreislauf ausgeschleust. Die Temperatur des Kondensators bestimmt die Abgasfeuchte.

Ausführungsbeispiel 1: In einem Wirbelschichttrockner mit eingebautem Wärmetauscher in der Schicht wurde oberflächenfeuchtes Eisensulfat-Heptahydrat zu Monohydrat getrocknet. 420kg/h feuchtes Heptahydrat und 260 kg/h trockenes Rückgut (Monohydrat Produkt und Staub aus der Trocknung) wurden über einen Mischer dem Trockner zugeführt. Die Trocknungsluft (1300kg/h) hatte eine Temperatur von 185°C, der Wärmetauscher von 195° und die Produktschicht von 117°C. Zusammen mit der Anfangsbeladung von 10g/kg trockene Luft ergab sich durch das verdampfte Wasser eine Abluftbeladung von 146g/kg tr. L. entsprechend einer absoluten Feuchte von 12,7% und einem Taupunkt von ca. 63°C. Das Ergebnis dieser Trocknung bei niedriger Feuchte war ein leichtes, staubiges Monohydrat-Granulat mit 710 g/l Schüttgewicht, 250µm mittlerem Korndurchmesser und einem Staubaustrag mit der Abluft von 66% während der Trocknung.

Ausführungsbeispiel 2: In dem gleichen Trockner wurde die gleiche Menge Mischung von Heptahydrat und Rückgut bestehend aus Monohydrat und Staub aus der Trocknung mit nahezu gleichen Temperaturen getrocknet (Luft 178°, Wärmetauscher 195°, Produktschicht 120°). Hauptunterschied zu Beispiel 1 war, dass die Luft vollständig zurückgeführt wurde und das verdampfte Wasser in einem Wäscher auskondensiert wurde. Wegen des sich ändernden Produktes musste die Kreisluftförderung auf 1730 kg/h angehoben werden. Der Wäscher hatte eine Temperatur von 65°, was zu einer Gesamtbeladung von 205g Wasser/kg tr.L. der dem Trockner wieder zugeführten Luft führte. Zusammen mit dem verdampften Wasser hatte die Abluft nach dem Trockner dann eine Beladung von 329g/kg, was einer absoluten Feuchte von 24,8% und einem Taupunkt von ca. 73° entspricht. Durch diese feuchte Atmosphäre während der Trocknung wurde ein stabiles und schweres Monohydrat erzeugt mit einem Schüttgewicht von 1195 g/l, einem mittleren Korndurchmesser von 450 µm und einem Staubaustrag mit der Abluft von nur 15%.

In den folgenden Figuren werden Verfahrensvarianten beschrieben am Beispiel eines Wirbelschichttrockners. Sie gelten jedoch sinngemäß auch für die oben angeführten anderen Trocknerbauarten.
Fig. 1 zeigt ein erfindungsgemäßes System mit Rückgutstrom,
Fig. 2 ein System gemäß der Erfindung mit teilweiser Gasrückführung und
Fig. 3 ein erfindungsgemäßes System mit vollständiger Gaskreislaufschließung.

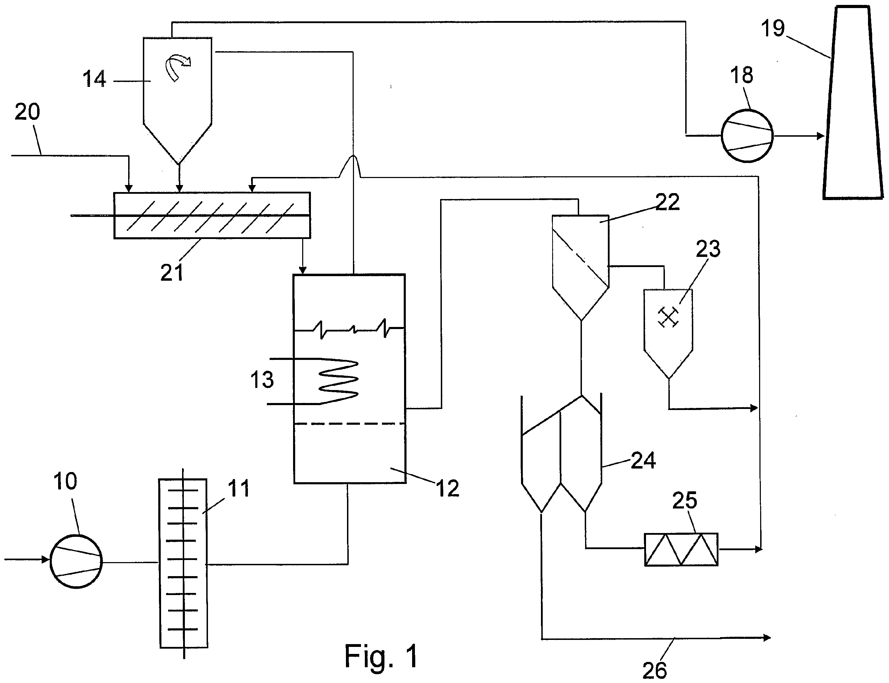

Der Zuluftventilator 10 (siehe Fig.1) drückt Umgebungsluft durch ein Heizregister 11 in den Trocknungsapparat (hier einen Wirbelschichttrockner) 12, in dem das Salz optional auch durch den Wärmetauscher 13 erhitzt wird und das Kristallwasser abgibt. Das feuchte Trocknungsgas verlässt den Trockner, wird in einem Filter oder Zyklon 14 vom Staub befreit und gelangt nach einer optionalen zusätzlichen Gasreinigung über den Abluftventilator 18 ins Freie 19. Das oberflächenfeuchte, kristallwasserhaltige Salz 20 wird im Mischer 21 mit dem abgeschiedenen Staub aus Zyklon oder Filter 14 und optional mit rückgeführtem Produkt abgepudert und dem Trockner 12 zugeführt. Nach der Trocknung verlässt es den Trockner 12 und in einem optionalen Sieb 22 wird Überkorn abgetrennt, vermahlen 23 und dem Mischer 21 zugeführt. Die Gutfraktion gelangt in ein Überlaufsilo 24, aus dem optional Rückgut für den Mischer 21 mittels einer Dosierschnecke 25 abgezogen wird sowie das Endprodukt 26 zur Weiterverarbeitung gelangt.

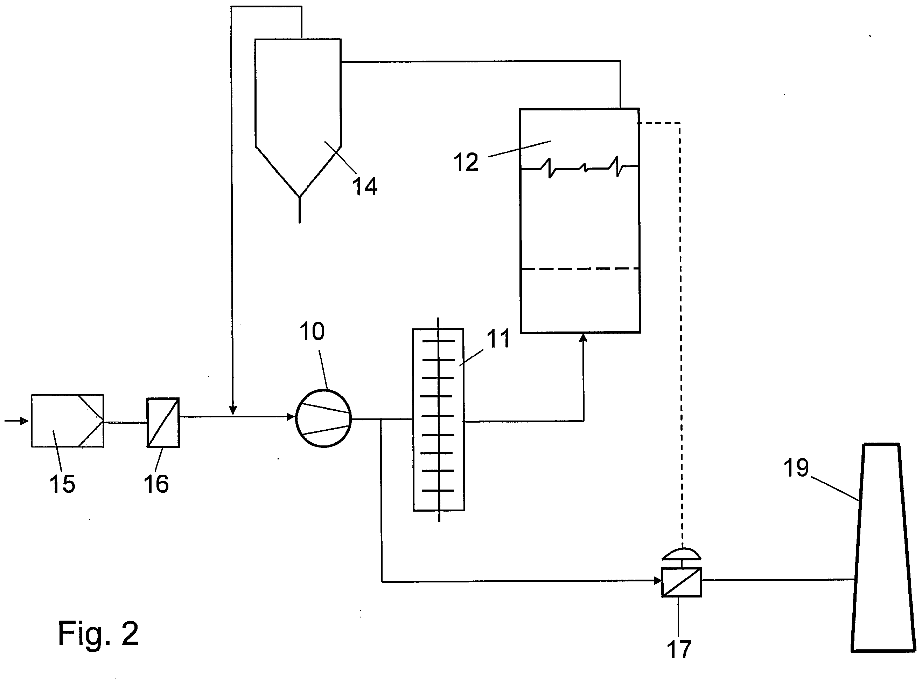

In Fig. 2 ist die Variante des Trocknungsprozesses mit teilweiser Gasrückführung zur Einstellung einer definierten Gasfeuchte, d.h. eines festgelegten Feuchtegehalts im Trockner dargestellt. Die Produktbehandlung ist gleich wie in Fig. 1 beschrieben und der Übersichtlichkeit halber nicht dargestellt. Das Gebläse 10 drückt das Gas im Kreislauf durch Heizregister 11, Trockner 12 und Staubabscheider 14. Mit Hilfe des Drosselorgans 16 wird ein Teilstrom Frischluft zudosiert der über den optionalen Filter 15 gereinigt wird. Damit wird der Feuchtegehalt des Gases im Trockner 12 eingestellt. Die entsprechende Menge feuchtes Abgas wird über das druckgeregelte Drosselorgan 17 auf der Druckseite des Ventilators ausgeschleust. Dieser Abgasstrom 19 enthält auch die verdampfte Wassermenge des Produkts. Je kleiner der Frischluftteilstrom ist, desto höher wird die Gasfeuchte.

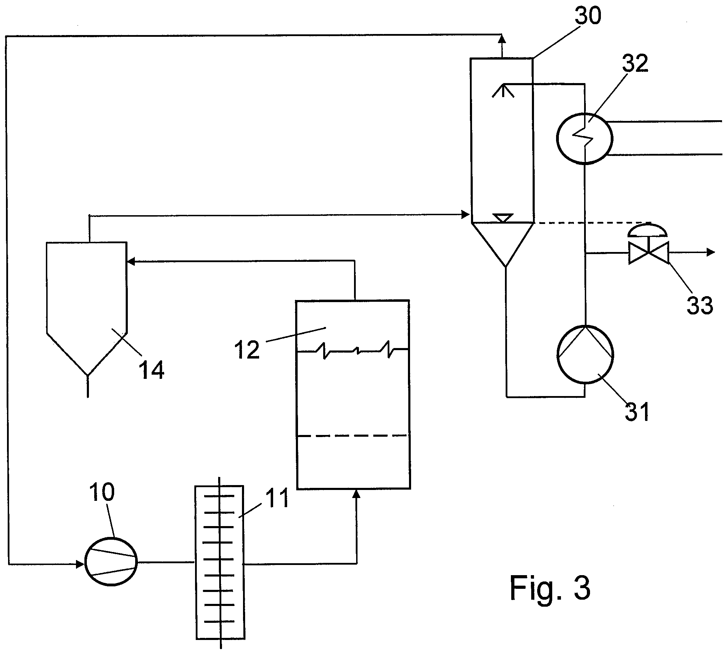

Bei vollständiger Kreislaufschließung (siehe Fig. 3) muss das verdampfte Wasser selektiv aus dem Kreislaufgas entfernt werden. Dies geschieht zweckmäßigerweise durch Kondensation in einem Oberflächen- oder einem Waschkondensator 30. Das Waschwasser wird im Kreis gepumpt 31 und die Kondensationswärme wird über den Kühler 32 entzogen. Die kondensierte Menge Wasser, die ebenfalls der verdampften Wassermenge aus dem Produkt entspricht, wird niveaugeregelt 33 dem Prozess entzogen. Mit Hilfe des Kühlers 32 kann die Temperatur des Waschwassers so eingestellt werden, dass sich über den Partialdampfdruck des Wassers die erforderliche Anfangsfeuchte des Kreislaufgases ergibt. Die Anfangsfeuchte errechnet sich aus der gewünschten Abgasfeuchte abzüglich des durch die Wasserverdampfung aus dem Produkt erzeugten Anteils. Das Kreislaufgas wird von dem Gebläse 10 über Heizregister 11, Trockner 12, Staubabscheider 14 und Waschkondensator 30 im Kreislauf bewegt. Der Produktweg entspricht hier der Fig.1 und ist der Übersichtlichkeit wegen wieder nicht dargestellt.
Die dargestellten Systeme sind nur beispielhaft und am Beispiel eines Wirbelschichttrockners (mit oder ohne eingebauten Wärmetauscher) dargestellt. Es können aber auch Drehrohrtrockner (Trommeltrockner), Stromrohrtrockner oder Wirbelschichtsprühgranulatoren eingesetzt werden.

## Patentansprüche

1. Verfahren zur Trocknung von kristallwasserhaltigen Salzen in konvektiven Apparaten **dadurch gekennzeichnet, dass** die Trocknung oberhalb eines festgelegten Feuchtegehalts, beispielsweise über einer absoluten Feuchte von 10%, des Trocknungsgases abläuft, wobei der Feuchtegehalt des Trocknungsgases oberhalb des festgelegten Feuchtewerts durch vollständige Rückführung desselben eingestellt wird, wobei das verdampfte Wasser aus dem Kreislauf durch Kondensation ausgeschleust und der Feuchtegehalt des Trocknungsgases mit Hilfe der Kondensatortemperatur eingestellt wird.

2. Verfahren nach Anspruch 1, **dadurch gekennzeichnet, dass** Staub und/oder getrocknetes Produkt mit dem feuchten kristallwasserhaltigen Salz vor der Trocknung zusammengeführt und gegebenenfalls gemischt wird.

3. Verfahren nach einem der Ansprüche 1 oder 2, **dadurch gekennzeichnet, dass** gemahlenes Überkorn mit dem feuchten kristallwasserhaltigen Salz vor der Trocknung zusammengeführt und gegebenenfalls gemischt wird.

4. Verfahren nach einem der Ansprüche 1 bis 3, zur Trocknung von Eisensulfat-Heptahydrat zu Monohydrat, **dadurch gekennzeichnet, dass** das Produkt ein Schüttgewicht über 1100 g/l aufweist und die absolute Feuchte des Trocknungsgases beim Verlassen des Trockners mehr als 15% beträgt.

## Claims

1. Method for drying salts containing water of crystallisation in convective devices, **characterised in that** drying takes place above a certain defined moisture content, for example an absolute moisture content of 10%, in the drying gas, where the moisture content of the drying gas is set above the defined moisture value by fully recirculating the gas, where the evaporated water is discharged from the loop by means of condensation and the moisture content of the drying gas is set with the aid of the condenser temperature.

2. Method according to Claim 1, **characterised in that** dust and/or dried product is combined with the moist salt containing water of crystallisation before drying and mixed if necessary.

3. Method according to one of Claims 1 or 2, **characterised in that** ground oversized granules are combined with the moist salt containing water of crystallisation before drying and mixed if necessary.

4. Method according to one of Claims 1 to 3 for drying iron sulphate heptahydrate to monohydrate, **characterised in that** the product has a bulk density of more than 1100 g/l and the absolute moisture content in the drying gas is more than 15% when it leaves the dryer.

## Revendications

1. Procédé de séchage de sels contenant de l'eau de cristallisation dans des appareils à convection, **caractérisé en ce que** le séchage se déroule au-dessus d'une teneur en d'humidité définie, par exemple au-dessus d'une humidité absolue de 10 %, du gaz de séchage, la teneur en humidité du gaz de séchage étant réglée au-dessus de la valeur d'humidité définie par sa recirculation complète, l'eau évaporée étant évacuée du circuit par condensation et la teneur en humidité du gaz de séchage étant réglée à l'aide de la température du condensateur.

2. Procédé selon la revendication 1, **caractérisé en ce que** la poussière et/ou le produit sec est combiné et éventuellement mélangé au sel contenant de l'eau de cristallisation avant le séchage.

3. Procédé selon l'une des revendications 1 ou 2, **caractérisé en ce que** le déclassé supérieur broyé est combiné et éventuellement mélangé au sel contenant de l'eau de cristallisation avant le séchage.

4. Procédé selon l'une des revendications 1 à 3, destiné au séchage de sulfate ferreux heptahydraté en monohydrate **caractérisé en ce que** le produit présente un poids volumétrique supérieur à 1 100 g/l et l'humidité absolue du gaz de séchage est supérieure à 15 % lorsqu'il quitte le séchoir.
